(19)

**Europäisches Patentamt**
**European Patent Office**
**Office européen des brevets**

(11)  **EP 1 821 481 B1**

(12)  **EUROPEAN PATENT SPECIFICATION**

(45) Date of publication and mention
of the grant of the patent:
**31.03.2010 Bulletin 2010/13**

(51) Int Cl.:
*H04L 27/26* (2006.01)          *H04L 1/06* (2006.01)

(21) Application number: **07250430.1**

(22) Date of filing: **01.02.2007**

(54) **OFDM - MIMO radio frequency transmission system**

OFDM MIMO-Hochfrequenzübertragungssystem

Système de transmission de fréquence radio OFDM - MIMO

(84) Designated Contracting States:
**AT BE BG CH CY CZ DE DK EE ES FI FR GB GR HU IE IS IT LI LT LU LV MC NL PL PT RO SE SI SK TR**

(30) Priority: **20.02.2006 GB 0603356**

(43) Date of publication of application:
**22.08.2007 Bulletin 2007/34**

(73) Proprietor: **BRITISH BROADCASTING CORPORATION**
**London W1A 1AA (GB)**

(72) Inventor: **Moss, Peter Neil**
**Kingswood Warren**
**Tadworth**
**Surrey KT20 6NP (GB)**

(74) Representative: **Abnett, Richard Charles**
**Reddie & Grose**
**16 Theobalds Road**
**London**
**WC1X 8PL (GB)**

(56) References cited:
**US-A1- 2003 072 254      US-A1- 2004 179 627**
**US-A1- 2005 084 000**

- BARHUMI I ET AL: "Optimal training sequences for channel estimation in MIMO OFDM systems in mobile wireless channels" BROADBAND COMMUNICATIONS, 2002. ACCESS, TRANSMISSION, NETWORKING. 2002 INTERNATIONAL ZURICH SEMINAR ON FEB. 19-21, 2002, PISCATAWAY, NJ, USA,IEEE, 19 February 2002 (2002-02-19), pages 441-446, XP010584424 ISBN: 0-7803-7257-3

**Description**

BACKGROUND OF THE INVENTION

This invention relates to an OFDM - MIMO radio frequency transmission method and to an OFDM-MIMO receiver for use in such a method.

Reference should be made to the following documents by way of background:

[1] ETSI Standard ETS 300 744, Digital Broadcasting Systems for Television, Sound and Data Services; framing structure, channel coding and modulation for digital terrestrial television, 1997, the DVB-T Standard.

[2] United States Patent 5,345,599 Paulraj et al., 1994.

[3] G. Fischini and M. Gans, "On Limits of Wireless Communication in a Fading Environment when using Multiple Antennas", Wireless Personal Communications, Vol. 6, No. 3, March 1998, pages 311-335.

[4] European Patent Application 1221793A which describes the basic structure of a DVB-T receiver.

[5] SDM-COFDM Technologies for Broadband Wireless Access over 100 MBIT/s, Sugiyama et al, NTT Technical Review, Vol. 2, No. 1, January 2004.

[6] Pilot-to-Data Power Ratio for Maximizing the Capacity of MIMO-OFDM, Kim et al, IEEE Trans. on Communications, 22 November 2004. See also references [1] to [7] of this paper which describe various OFDM-MIMO proposals, and references [8] to [20] which are concerned with aspects of pilots in OFDM and/or MIMO systems.

[7] R. Monnier, J.B. Rault, and T. de Couasnon, "Digital television broadcasting with high spectral efficiency" IBC Amsterdam, The Netherlands, pp. 380-384, 1992, which describes a digital transmission system employing dual-polarisation transmissions.

[8] Schulze and Lüders "Theory and Applications of OFDM and CDMA", pub. John Wiley & Sons, 2005, ISBN 0470850698, see especially pages 181 to 183.

[9] International Patent Application WO01/76110 Qualcomm Inc/Wallace et al. describes obtaining CSI information in an OFDM-based MIMO system by using pilot symbols. The receiver units determine the CSI for certain disjoint sub-channels that carry pilot symbols, and report these back to the transmitter, which produces estimates for the disjoint sub-channels that do not carry pilot symbols

[10] United States Patent Application 2004/0179627 Ketchum et al., 2004, describes pilots for use in MIMO systems which comprise beacon pilots and MIMO pilots, amongst others, some of the pilots having inverted phase compared to others, see in particular paragraph [0052].

[11] United States Patent Application 2005/0084000 Krauss et al., 2005, describes an OFDM system in some of the pilot signals are phase shifted relative to others, see e.g. paragraphs [0032] and [0033].

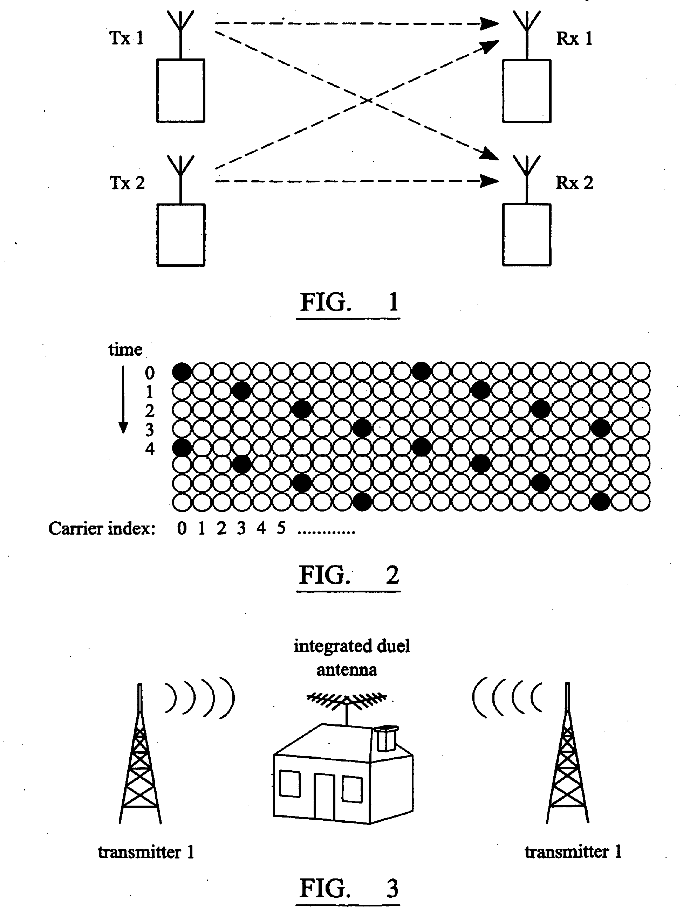

Methods of delivering terrestrial digital wireless television have been proposed which use Multiple Input, Multiple Output (MIMO) techniques to allow dual-directional or dual-polarisation transmissions to be employed. In a typical basic system there are two transmit antennas and two receive antennas, with associated transmitters and receivers, as illustrated in Fig. 1 of the accompanying drawings. Such a system can deliver up to twice the throughput of conventional DVB-T (Digital Video Broadcasting - Terrestrial), whilst requiring no additional spectrum. More generally MIMO refers to a radio link employing at least two (two or more) transmitters and two receivers. The basic assumption is that in a suitable environment the RF (radio frequency) paths from each transmitter to each receiver are sufficiently dissimilar to act, at least partially, as two distinct channels.

SUMMARY OF THE INVENTION

The present invention provides an OFDM-MIMO radio frequency transmission method and a transmitter and receiver for use in the method.

An OFDM-MIMO system embodying the invention is described in more detail below with reference to the drawings. This system is a DVB-T system with pilot signal transmissions, some of the pilot signal transmissions being continual pilot signal transmissions and some of the pilot signal transmissions being scattered pilot signal transmissions. The phases of the pilot signal transmissions are chosen or changed such that some of the corresponding pilot signal transmissions in the different many-carrier signals are in the same relatively-non-inverted phase and others of the transmissions are with relatively-inverted phase. At least two many-carrier signals are transmitted as a corresponding number of radio-frequency transmission signals on the same frequency. At a receiver, the receiver having automatic frequency control, each of the received signals is decoded to decode data bits and pilot signal transmissions from the received transmissions, the pilot signal transmissions for all the decoders being located for each symbol on defined ones of the carriers. The pilot signals are extracted by combining pilot signal transmissions having relatively-non-inverted phase with pilot signal transmissions having relatively-inverted phase so as to obtain an indication of the transmission channel characteristics; and the data outputs of the decoders are assembled into a single digital output signal.

The receiver automatic frequency control is based on the received pilots, and, in accordance with this invention, if a scattered pilot is co-incident with a continual pilot, the pilot is at least initially ignored for the purposes of the automatic frequency control, but once synchronisation is achieved a lesser number of pilots are ignored.

Such modifications to the standard DVB-T transmission signal allow the receiver to have knowledge of the resulting 2-by-2 matrix channel.

BRIEF DESCRIPTION OF THE DRAWINGS

The invention will be described in more detail by way of example with reference to the accompanying drawings, in which:

**Fig. 1** is a schematic diagram of a MIMO system with two transmitters and two receivers;
**Fig. 2** is a timing diagram illustrating pilots in an OFDM signal as used in accordance with the DVB-T standard (reference [1] above);
**Fig. 3** illustrates a 2-by-2 OFDM - MIMO system used for DVB-T employing dual directional Yagi antennas;
**Fig. 4** is a block diagram of a transmitter in the system;
**Fig. 5** is a block diagram of a receiver in the system; and
**Fig. 6** illustrates the principle by which the elements of the complex transmission signal can be derived from received pilots.

DETAILED DESCRIPTION OF A PREFERRED EMBODIMENT OF THE INVENTION

Digital terrestrial television (DTT) using the DVB-T standard is now operational and is well-known to those skilled in the art. It uses COFDM (coded orthogonal frequency division multiplex or coded OFDM) which is a many-carrier system which uses a large number of orthogonal and closely-spaced carriers within a single frequency band. The data to be transmitted is distributed over the many carriers, thereby greatly reducing the data rate on each carrier. The data is transmitted in a succession of symbol periods, each symbol period conveying one QAM (quadrature amplitude modulated) symbol on each of the many data-carrying carriers.

To assist in frequency synchronization and in channel estimation, the signal includes two types of pilot signals, these being selected ones of the many carriers, that do not carry data. The pilots or training signals are arranged in frequency and time in a defined structure. As defined in the DVB-T standard (reference [1] above), continual pilots are provided in addition to scattered pilots. The modulation applied to both continual and scattered pilots may typically be +4/3 or -4/3, in accordance with a pseudo-random sequence in the carrier index. Such carriers are well-described in many publications including textbooks such as reference [8] above, which gives two possible grids for such pilots. One of these grids, namely a diagonal grid, is also shown as Fig. 2 of the accompanying drawings. The pilots are indicated by the black circles, the data carriers by open circles.

A two-by-two MIMO system is illustrated in Fig. 1. In this system there are two transmitters Tx1 and Tx2 transmitting to two receivers Rx1 and Rx2. The transmission paths are chosen in accordance with diversity or space multiplex techniques such that the receiver Rx1 receives a primary (wanted) signal from transmitter Tx1 and only a secondary (interfering) signal from transmitter Tx2, and conversely receiver Rx2 receives a primary signal from transmitter Tx2 and only a secondary signal from transmitter Tx1. This may be achieved, for example, in a number of possible ways, by having spaced-apart antennas in different geographical locations, as illustrated in Fig. 3. An alternative is to use directional orthogonal dual-polarisation transmissions from the same transmitter location (a single mast) with a directional dual-polarised antenna with different antenna polarisations at the receiver site. Channel capacity is maximised when there is minimal cross-coupling between the transmitted signals. With the dual-polarisation version, if the channel is to approach the unit matrix to maximise the capacity, the polarization discrimination needs to be as high as possible. Otherwise the channel may exhibit poor capacity. Although referred to above as primary and secondary signals, the system can tolerate the levels being comparable, provided that the channel matrix is substantially orthogonal. That is, as long as the elements of the receive antenna remain orthogonal, an angular offset with respect to the transmitter elements does not impair capacity, since the channel matrix is simply multiplied by an orthogonal rotation matrix. This leaves the capacity unchanged.

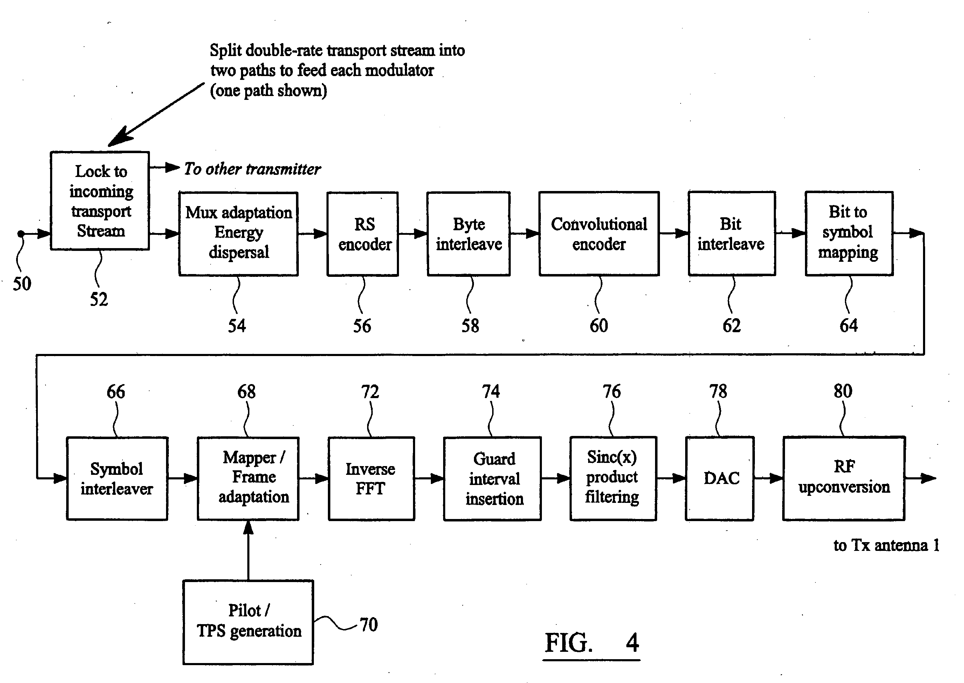

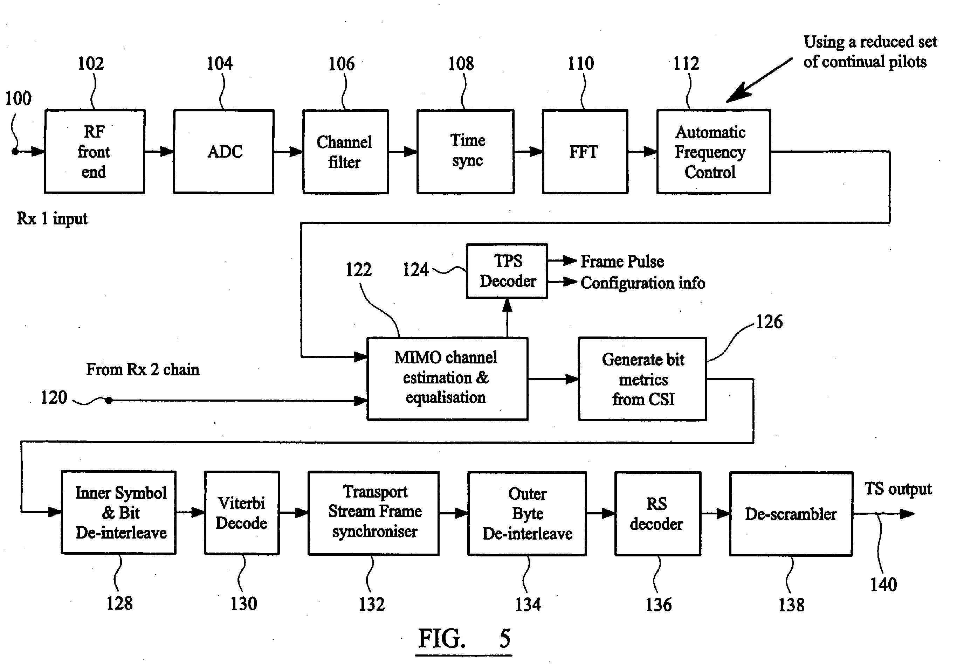

The two transmitters Tx1 and Tx2 each transmit half the required signal. The data is divided between the two channels in any convenient manner. The structure of each transmitter is well-known and is as described in for example references [1] and [4] above and illustrated in Fig. 4. Similarly the receivers each receive half the data, and the receivers are also well-known and may each take the form described in reference [4] above and illustrated in Fig. 5. However the receivers will also receive interfering signals in the form of the secondary signal from the 'other' transmitter. Figs. 4 and 5 are described below.

If the paths between the transmitters and receivers are not time varying, then the composite channel associated with Fig. 1 can be described by a 2 x 2 matrix of complex coefficients thus:

$$\mathbf{H} = \begin{pmatrix} h_{11} & h_{12} \\ h_{21} & h_{22} \end{pmatrix} \dots\dots\dots\dots\dots\dots\dots\dots\dots\dots\dots\dots\dots\dots\dots\dots\dots\dots(1)$$

where each coefficient $h_{ij}$ is of the form (with $i \equiv$ receiver index, $j \equiv$ transmitter index):

$$h_{ij} = A_{ij} \exp j\theta_{ij} \dots\dots\dots\dots\dots\dots\dots\dots\dots\dots\dots\dots\dots\dots\dots\dots(2)$$

The coefficients $h_{ij}$ must be deduced by the receiver, at each carrier position. The channel is assumed to be flat-fading over each individual carrier. This is ensured for DVB-T in practice by the relatively large number of carriers and their close spacing. Once the matrix **H** is known, a number of techniques are available to 'invert' the channel, the simplest being application of the inverse matrix to the received signal-plus-noise. This can be done, for example, using a zero-forcing (ZF) matrix inverse or using a minimum-mean-square error approach (MMSE). These techniques are well-known to those skilled in the art.

In the DTT-MIMO system as described the two-input receiver has knowledge of the 2-by-2 complex channel which characterises the transmission path. This type of information is encapsulated, in a conventional DVB-T system, in a complex vector of channel estimates. This vector is obtained by time and frequency interpolation of the DVB-T pilot structure introduced at the transmitter. Each element of the vector is a complex number ($h^0$ ...... $h^{1704}$) representing the channel at a particular carrier position.

In the 2-by-2 MIMO case, the channel estimate obtained by the $i^{th}$ receiver corresponds to the sum of the complex transmission paths $h_{i1}$ and $h_{i2}$ respectively. What the receivers need is a way to estimate $h_0$ and $h_1$ individually. We propose inverting the scattered pilots at one of the two transmitters every other symbol. This causes the receiver to estimate the sum of the complex transmission paths $h_{i1}$ and $h_{i2}$ during, say, even numbered symbols and the difference during the alternate odd-numbered symbols. Now since we already have the sum, with the difference of the complex transmission paths $h_{i1}$ and $h_{i2}$ obtained in this way then the individual terms $h_0$ and $h_1$ can be extracted by simple arithmetic. More generally, the phases of the pilots are changed such that selected ones of the pilots are relatively inverted in a predictable way.

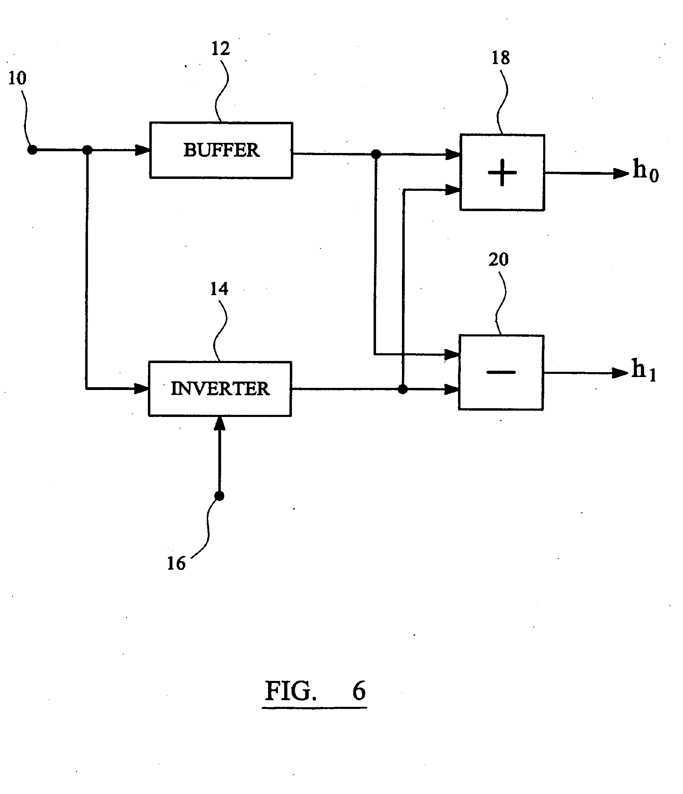

Fig. 6 shows the functionality required to receive this result. Fig. 6 may be implemented in hardware, though will more usually be implemented in software, in which case the figure may be regarded as being in the nature of a flow chart. The figure illustrates the channel estimate obtained from one of the pilots being received at an input 10. This is applied both to a buffer 12 providing a delay of one symbol period, and an inverter 14, which receives at an input 16 a square wave control signal with a period equal to two symbol periods. That is for one symbol period the signal at input 16 is a one and for the other it is a zero. The output of the buffer 12 and inverter 14 are each applied to both of an adder 18 and a subtractor 20. One of these will provide the output $h_0$ and the other the output $h_1$. It will be appreciated that Fig. 6 is a very simplified version in that it does not show the complex nature of the signals and that, in fact, the implementation will be by way of a matrix inversion as described above. The principle of operation may nevertheless be seen from this figure.

The receiver is thus arranged to carry out the necessary sum and difference operations on a pair of consecutive channel estimates in order to find the complex transmission paths $h_{i1}$ and $h_{i2}$. Clearly the receiver must be modified to carry out the necessary sum and difference operations on a pair of consecutive channel estimates in order to find the complex transmission paths $h_{i1}$ and $h_{i2}$. This process, and the subsequent matrix inversion to recover the transmitted data, is analogous to the zero-forcing equaliser found in a conventional DVB-T receiver.

In a practical implementation, once each 'half of the 2-by-2 receiver has determined its associated channel coefficients $h_{i1}$ and $h_{i2}$, then matrix inversion can take place using a zero-forcing (ZF) inverse or a minimum-mean-square error (MMSE) inverse, as mentioned above. As the name suggests, the latter minimises the total error.

The ZF inverse is given by:

$$(\mathbf{H}^H \mathbf{H})^{-1} \mathbf{H}^H$$

where $\mathbf{H^H}$ represents the Hermitian transpose. The ZF inverse reduces to $\mathbf{H^{-1}}$ for a square full-rank matrix.

The MMSE inverse is given by:

$$(\alpha \mathbf{I} + \mathbf{H^H H})^{-1} \mathbf{H^H}$$

where a is the power noise-to-signal ratio and I the identity matrix.

A distinct channel matrix exists for each carrier position, the nature of which determines the signal-to-noise ratio of each element of the recovered signal vector. Preferably the channel matrix is near-orthogonal to minimise noise peaking. With the matrix structure inherent in both the dual-directional and dual-polarisation versions of the system described this condition is largely satisfied. The transmitted data is thereby recovered.

It is important to take account of the effect of the continual pilot corruption mentioned above in respect of its impact on receiver automatic frequency control (AFC). This is now considered.

We have appreciated that a difficulty arises if during some DVB-T symbols the scattered pilots are coincident in their carrier positions with the continual pilots. For instance, carrier index 0 is a continual pilot and so, referring to Fig. 2, it is coincident with a scattered pilot at time 0, 4, 8 etc. If this happens to a symbol which is to have pilot inversion, the inversion takes priority and the continual pilot is effectively corrupted. We have appreciated that this necessitates changes to the receiver AFC, which are considered below.

In a DVB-T receiver, the AFC works by determining the position of the continual pilots in a demodulated signal vector and then accumulating the phase of the pilots in such a way as to determine the sign and magnitude of any frequency error.

In the context of MIMO using scattered pilot inversion as described, the continual pilots which have been corrupted (by inversion of one or more of the transmitted sources) are determined and, in accordance with this invention, removed from the AFC processing. Consider, for instance, the 2K mode of DVB-T which has 45 continual pilots. Let us suppose that symbol 0 in Fig. 2 has no pilot inversion on either transmitter, symbol 1 has pilot inversion on one of the transmitters, and so on. It follows that even-numbered symbols never have corrupted continual pilots, but odd numbered symbols sometimes do.

Of the 45 continual pilots, it turns out 11 are corrupted in symbol 1 and a different 11 in symbol 3. So, if we ignore all 22 potentially corrupted pilots during frequency acquisition and just use the remaining 23, then the system will work as before, albeit with a slightly poorer AFC signal-to-noise ratio. Once full receiver synchronisation is obtained, and the DVB-T superframe position determined, then only 11 pilots need be ignored on each of symbols 1 and 3, full use being made of all continual pilots on symbols 0 and 2. That is, a lesser number of pilots are ignored. This gives improved bandwidth or signal-to-noise ratio within the AFC lock-loop compared to just using 23 continual pilots all the time.

The last-mentioned point is particularly important in a 4-by-4 system, as described below, where only one symbol in four is fully uncorrupted and only 12 continual pilots can be relied on initially. After superframe acquisition, all but a maximum of 11 are usable as before.

The 2k-mode of DVB-T has been assumed for illustrative purposes (1705 carriers), but the extension to 8k is straightforward, by considering the appropriate list of 177 continual pilots instead of 45, and is indeed preferred. For compatibility with a single frequency network it is preferred that the base DVB-T mode chosen be 8k, with a guard interval consistent with the proposed transmitter density and power. A typical set of parameters and the resultant data rate are shown in table 1 below.

| Parameter | Value |
|---|---|
| Modulation | 64 QAM |
| Error Coding Rate | 2/3 |
| Guard Interval ($\mu$s) | 28 (1/32) |
| Mode | 8k |
| Data rate (Mbits/s) | 24.1 x 2 =48.2 |

The transmitter structure will now be described with reference to Fig. 4. The input signal is received at a terminal 50 and in a circuit 52 locked to the incoming transport stream the signal is split into two parts to feed the modulators of each of the two transmitters. Only one of the transmitters is shown in detail. In this transmitter, the signal is applied to an MPEG multiplexer and energy dispersal circuit 54 and thence to an outer Reed Solomon encoder 56. This is the first part of the forward error corrector which also includes a byte interleaving circuit 58, a convolutional encoder 60, and a bit interleaving circuit 62. This signal is then applied to a byte to symbol mapper 64, and thence to a symbol interleaver 66. This forms the output of the forward error corrector which is applied to a mapper and frame adaptation circuit 68. The mapper maps the figure into QAM form. It is at this point that the pilots are added to the signal from a pilot and transmission parameter signalling (TPS) generation circuit 70. The output of the mapper and frame adaptation circuit 60 is applied to the OFDM coder, comprising an inverse FFT circuit 72 and a guard interval insertion circuit 74. After appropriate filtering in a sinc(x) product filter 76, the signal is then applied to a digital-to-analogue converter 78, and finally to an RF upconversion circuit or transmitter front end 80 and finally to the transmit antenna. The pilot generation circuit 70 is adapted as described above to alternate the phase on selected carriers on successive symbols.

The corresponding receiver is illustrated in Fig. 5. The signal from one of the input antennas is received at a terminal 100 and applied to an RF front end where it is down converted. The signal is then applied to an analogue-to-digital converter 104 and thence to a channel filter 106. The output of this is applied to a time synchronising circuit 108, and then to the OFDM decoder in the form of a Fast Fourier Transform circuit 110. The output of the FFT is applied to an automatic frequency control circuit 112. The output of the AFC circuit 112 is applied to a MIMO channel estimation and equalisation circuit 122, which also receives at an input 120 the corresponding input from the other of the two receivers. The channel estimation and equalisation circuit is adapted as described above and provides outputs to a TPS decoder 124 which provides frame pulses and configuration information, and to a circuit 126 which generates the bit metrics from the channel state indication obtained in circuit 122. In conventional fashion this is then applied to the inner symbol and bit de-interleaver 128, a Viterbi decoder 130, a transport stream frame synchroniser 132, an outer byte de-interleaver 134, a Reed Solomon decoder 136, and finally a descrambler 138 in order to provide the transport stream output 140. The MIMO channel estimation and equalisation circuit 122 is adapted as described above in order to obtain separate channel estimation for the signals received at the receivers making use of the pilot phase inversion introduced at the transmitters.

The basic 2-by-2 system described can be expanded to include both dual-polarisation and dual-directional reception. The system would then deliver up to four times the raw capacity of DVB-T or, more realistically, three times with enhanced robustness conferred by the application of space-time coding. The penalty is increased system complexity, and slightly higher cost of the receiver antenna.

The method is not limited to two-by-two MIMO system with two transmitters and two receivers by may also be used with other systems such as a 3-by-3 system or a 4-by-4 system. The channel capacity increases with the number of transmit and receive antennas. There may be different numbers of transmitters and receivers. The above 2-by-2 case is generalised by first recognising that the transmitted scattered pilot sequence (ignoring the pseudo-random multiplier) can be represented by a 2-by-2 Hadamard matrix thus:

$$\begin{pmatrix} 1 & 1 \\ 1 & -1 \end{pmatrix}$$

Here the row index can be regarded as the transmitter index and the column index the time index.

In an analogous manner a 4-by-4 system can be defined using a 4-by-4 Hadamard matrix. In this case, each receiver learns about its four specific paths over four symbols. A suitable matrix is:

$$\begin{pmatrix} 1 & 1 & 1 & 1 \\ 1 & -1 & 1 & -1 \\ 1 & 1 & -1 & -1 \\ 1 & -1 & -1 & 1 \end{pmatrix}$$

although this is not unique since, for instance, the columns may be re-arranged.

For 3-by-3 and many higher values of N, where a Hadamard matrix is not available, an alternative non-Hadamard but full rank N matrix can be used, such as (for 3-by-3):

$$\begin{pmatrix} 1 & 1 & 1 \\ 1 & 1 & -1 \\ 1 & -1 & -1 \end{pmatrix}$$

Thus the invention provides a method of using a MIMO channel in a modified DVB-T system, by the use of selective inversion of the DVB-T scattered pilots, to enhance channel estimation. For 2-by-2 and 4-by-4 systems, the preferred implementation is based on a Hadamard matrix. For 3-by-3, and others, a non-Hadamard but full-rank matrix may be used. Changes to AFC processing in the receiver may be desirable to minimise the impact of corruption of continual pilots. Initial acquisition can proceed using a reduced set of continual pilots, although once superframe acquisition is obtained the number of usable pilots may be substantially restored.

The system may be incorporated in a single-frequency network terrestrial digital television system and, as such, features a high degree of spectrum efficiency. The system may be based on dual-directional transmission or, more simply, dual-polarisation transmission.

**Claims**

**1.** A method of OFDM-MIMO transmission comprising the steps of:

at a transmitter:

receiving a digital data signal to be transmitted;
encoding respective data bits of the data signal together with pilot signals into at least two OFDM many-carrier signals with each carrier conveying a succession of symbols, and with the pilot signal transmissions of all the encoders being located for each symbol on defined ones of the carriers, some of the pilot signal transmissions being continual pilot signal transmissions and some of the pilot signal transmissions being scattered pilot signal transmissions, the phases of the pilot signal transmissions being chosen or changed such that some of the corresponding pilot signal transmissions in the different many-carrier signals are in the same relatively-non-inverted phase and others of the transmissions are with relatively-inverted phase; and
transmitting the at least two many-carrier signals as a corresponding number of radio-frequency transmission signals on the same frequency band; and

at a receiver, the receiver having automatic frequency control:

receiving the two radio-frequency transmission signals on a transmission channel on the same frequency band, the radio-frequency transmission signals each comprising many carriers each conveying a succession of symbols;
decoding each of the received signals to decode data bits and pilot signal transmissions from the received transmissions, the pilot signal transmissions for all the decoders being located for each symbol on defined ones of the carriers, the pilot signals being extracted by combining pilot signal transmissions having relatively-non-inverted phase with pilot signal transmissions having relatively-inverted phase so as to obtain an indication of the transmission channel characteristics; and
assembling the data outputs of the decoders into a single digital output signal;
**characterized in that** the receiver automatic frequency control is based on the received pilots, and **in that** if a scattered pilot is co-incident with a continual pilot, the pilot is at least initially ignored for the purposes of the automatic frequency control, but once synchronisation is achieved a lesser number of pilots are ignored.

2. An OFDM-MIMO receiver for use in the method of claim 1, the receiver having automatic frequency control and comprising:

at least two radio-frequency receiver stages (102) arranged to receive OFDM transmissions transmitted on a transmission channel on the same frequency band, the OFDM transmissions comprising many carriers each conveying a succession of symbols;

a corresponding number of OFDM decoders (104-138) coupled to the outputs of the receiver stages respectively, and arranged to decode data bits and pilot signal transmissions from the received OFDM transmissions, the pilot signal transmissions for all the decoders being located for each symbol on defined ones of the carriers, the pilot signals being extracted by combining (18, 20) pilot signal transmissions having relatively-non-inverted phase (12) with pilot signal transmissions having relatively-inverted phase (14) so as to obtain an indication of the transmission channel characteristics; and

an output stage for assembling the data outputs of the decoders into a single digital output signal;

**characterised in that** the receiver automatic frequency control is based on the received pilots, and **in that** if a scattered pilot is co-incident with a continual pilot, the pilot is at least initially ignored for the purposes of the automatic frequency control, but once synchronisation is achieved a lesser number of pilots are ignored.

**Patentansprüche**

1. Verfahren zur OFDM-MIMO-Übertragung, das die folgenden Schritte beinhaltet:

an einem Sender:

Empfangen eines zu sendenden digitalen Datensignals;

Codieren jeweiliger Datenbits des Datensignals zusammen mit Pilotsignalen zu wenigstens zwei OFDM-Mehrträgersignalen, wobei jeder Träger eine Folge von Symbolen führt und die Pilotsignalübertragungen aller Codierer für jedes Symbol sich auf Definierten der Träger befinden, wobei einige der Pilotsignalübertragungen ständige Pilotsignalübertragungen sind und einige der Pilotsignalübertragungen gestreute Pilotsignalübertragungen sind, wobei die Phasen der Pilotsignalübertragungen so gewählt oder geändert werden, dass einige der entsprechenden Pilotsignalübertragungen in den verschiedenen Mehrträgersignalen in derselben relativ nichtinvertierten Phase sind und andere der Übertragungen in einer relativ invertierten Phase sind; und

Senden der wenigstens zwei Mehrträgersignale als eine entsprechende Zahl von Funkfrequenzübertragungssignalen auf demselben Frequenzband; und

an einem Empfänger, wobei der Empfänger automatische Frequenzregelung hat:

Empfangen der zwei Funkfrequenzübertragungssignale auf einem Übertragungskanal auf demselben Frequenzband, wobei die Funkfrequenzübertragungssignale jeweils viele Träger umfassen, die jeweils eine Folge von Symbolen führen;

Decodieren jedes der empfangenen Signale, um Datenbits und Pilotsignalbertragungen von den empfangenen Sendungen zu decodieren, wobei sich die Pilotsignalübertragungen für alle Decoder für jedes Symbol auf Definierten der Träger befinden, wobei die Pilotsignale durch Kombinieren von Pilotsignalübertragungen mit relativ nichtinvertierter Phase mit Pilotsignalübertragungen mit relativ invertierter Phase extrahiert werden, um eine Anzeige der Übertragungskanalcharakteristik zu erhalten; und

Zusammenfassen der Datenausgänge der Decoder zu einem einzigen digital Ausgangssignal;

**dadurch gekennzeichnet, dass** die automatische Frequenzregelung des Empfängers auf den empfangenen Pilotsignalen basiert, und dadurch, dass, wenn ein gestreutes Pilotsignal mit einem ständigen Pilotsignal zusammenfällt, das Pilotsignal wenigstens anfänglich für die Zwecke der automatischen Frequenzregelung ignoriert wird, aber nach dem Erzielen von Synchronisation eine geringere Zahl von Pilotsignalen ignoriert wird.

2. OFDM-MIMO-Empfänger für die Verwendung in dem Verfahren nach Anspruch 1, wobei der Empfänger eine automatische Frequenzregelung hat und Folgendes umfasst:

wenigstens zwei Funkfrequenzempfängerstufen (102) zum Empfangen von OFDM-Übertragungen, die auf einem Übertragungskanal auf demselben Frequenzband gesendet wurden, wobei die OFDM-Übertragungen viele Träger umfassen, die jeweils eine Folge von Symbolen führen;

eine entsprechende Zahl von OFDM-Decodern (104-138), die jeweils mit den Ausgängen der Empfängerstufen gekoppelt sind und die Aufgabe haben, Datenbits und Pilotsignalübertragungen von den empfangenen OFDM-Übertragungen zu decodieren, wobei sich die Pilotsignalübertragungen für alle Decoder für jedes Symbol auf Definierten der Träger befinden, wobei die Pilotsignale durch Kombinieren (18, 20) von Pilotsignalübertragungen mit relativ nichtinvertierter Phase (12) mit Pilotsignalübertragungen mit relativ invertierter Phase (14) extrahiert werden, um eine Anzeige für die Übertragungskanalcharakteristiken zu erhalten; und
eine Ausgangsstufe zum Zusammenfassen der Datenausgänge der Decoder zu einem einzigen digitalen Ausgangssignal;

**dadurch gekennzeichnet, dass** die automatische Frequenzregelung des Empfängers auf den empfangenen Pilotsignalen basiert, und dadurch, dass, wenn ein gestreutes Pilotsignal mit einem ständigen Pilotsignal zusammenfällt, das Pilotsignal wenigstens anfänglich für die Zwecke der automatischen Frequenzregelung ignoriert wird, aber nach dem Erzielen von Synchronisation eine geringere Zahl von Pilotsignalen ignoriert wird.

## Revendications

1. Méthode de transmission OFDM-MIMO comprenant les étapes consistant à:

   au niveau d'un émetteur:

   recevoir un signal de données numériques à transmettre;
   coder des bits de données respectives du signal de données avec des signaux pilotes dans au moins deux signaux OFDM multiporteuses avec chaque porteuse acheminant une succession de symboles et avec les transmissions de signaux pilotes de tous les codeurs étant situées pour chaque symbole, sur des porteuses définies parmi les porteuses, certaines des transmissions de signaux pilotes étant des transmissions de signaux pilotes continues et certaines des transmissions de signaux pilotes étant des transmissions de signaux pilotes diffusées, les phases des transmissions de signaux pilotes étant choisies ou changées de sorte que les transmissions de signaux pilotes correspondants dans les différents signaux multiporteuses sont de la même phase relativement non inversée et d'autres des transmissions sont d'une phase relativement inversée; et
   transmettre les aux moins deux signaux multiporteuses comme un nombre correspondant de signaux de transmission en fréquence radio sur la même bande de fréquence; et

   au niveau d'un récepteur, le récepteur ayant un contrôle de fréquence automatique:

   recevoir les deux signaux de transmission en fréquence radio sur un canal de transmission sur la même bande de fréquence, les signaux de transmission en fréquence radio comprenant chacun de nombreuses porteuses acheminant chacune une succession de symboles;
   décoder chacun des signaux reçus pour décoder des bits de données et des transmissions de signaux pilotes des transmissions reçues, les transmissions de signaux pilotes pour tous les décodeurs étant situées pour chaque symbole, sur des porteuses définies parmi les porteuses, les signaux pilotes étant extraits en combinant les transmissions de signaux pilotes d'une phase relativement non inversée avec les transmissions de signaux pilotes d'une phase relativement inversée de manière à obtenir une indication des caractéristiques du canal de transmission; et
   assembler les sorties de données des décodeurs en un seul signal de sortie numérique;
   **caractérisée en ce que** le contrôle de fréquence automatique du récepteur est basé sur les pilotes reçus et **en ce que** si un pilote diffusé est coïncident à un pilote continu, le pilote est, initialement au moins, ignoré dans le but du contrôle de fréquence automatique, mais une fois que la synchronisation est réalisée un moindre nombre de pilotes est ignoré.

2. Récepteur OFDM-MIMO à utiliser dans la méthode de la revendication 1, le récepteur ayant un contrôle de fréquence automatique et comprenant:

   au moins deux étages de récepteur de fréquence radio (102) arrangés pour recevoir des transmissions OFDM transmises sur un canal de transmission sur la même bande de fréquence, les transmissions OFDM comprenant de nombreuses porteuses acheminant chacune une succession de symboles;
   un nombre correspondant de décodeurs OFDM (104-138) couplés respectivement aux sorties des étages du récepteur et arrangés pour décoder des bits de données et des transmissions de signaux pilotes des transmissions OFDM reçues, les transmissions de signaux pilotes pour tous les décodeurs étant situées pour chaque symbole, sur des porteuses définies parmi les porteuses, les signaux pilotes étant extraits en combinant (18, 20) les transmissions de signaux pilotes d'une phase relativement non inversée (12) avec les transmissions de signaux pilotes d'une phase relativement inversée (14) de manière à obtenir une indication des caractéristiques du canal de transmission; et

un étage de sortie pour assembler les sorties de données des décodeurs dans un seul signal de sortie numérique;

**caractérisé en ce que** le contrôle de fréquence automatique du récepteur est basé sur les pilotes reçus et **en ce que** si un pilote diffusé est coïncident à un pilote continu, le pilote est, initialement au moins, ignoré dans le but du contrôle de fréquence automatique, mais une fois que la synchronisation est réalisée un moindre nombre de pilotes est ignoré.

FIG.    1

Carrier index:   0  1  2  3  4  5  ............

FIG.    2

integrated duel
antenna

transmitter 1                              transmitter 1

FIG.    3

Split double-rate transport stream into
two paths to feed each modulator
(one path shown)

Lock to incoming transport Stream → *To other transmitter*

Mux adaptation Energy dispersal → RS encoder → Byte interleave → Convolutional encoder → Bit interleave → Bit to symbol mapping

50
52
54
56
58
60
62
64

66
68
72
74
76
78
80

Symbol interleaver → Mapper / Frame adaptation → Inverse FFT → Guard interval insertion → Sinc(x) product filtering → DAC → RF upconversion

to Tx antenna 1

Pilot / TPS generation — 70

FIG. 4

12

Using a reduced set
of continual pilots

| 102 | 104 | 106 | 108 | 110 | 112 |

100

Rx 1 input

RF
front
end → ADC → Channel
filter → Time
sync → FFT → Automatic
Frequency
Control

TPS
Decoder → Frame Pulse
→ Configuration info

122    124

126

From Rx 2 chain

120

MIMO channel
estimation &
equalisation → Generate bit
metrics
from CSI

Inner Symbol
& Bit
De-interleave → Viterbi
Decode → Transport
Stream Frame
synchroniser → Outer
Byte
De-interleave → RS
decoder → De-scrambler → TS output

128    130    132    134    136    138

140

## FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5345599 A, Paulraj
- US 1994 A
- EP 1221793 A
- WO 0176110 A
- US 20040179627 A, Ketchum
- US 2004 A
- US 20050084000 A, Krauss
- US 2005 A

### Non-patent literature cited in the description

- **G. Fischini ; M. Gans.** On Limits of Wireless Communication in a Fading Environment when using Multiple Antennas. *Wireless Personal Communications,* March 1998, vol. 6 (3), 311-335
- **Sugiyama et al.** *NTT Technical Review,* January 2004, vol. 2 (1
- **MIMO-OFDM, Kim et al.** *IEEE Trans. on Communications,* 22 November 2004
- **R. Monnier ; J.B. Rault ; T. de Couasnon.** Digital television broadcasting with high spectral efficiency. *IBC Amsterdam,* 1992, 380-384
- **Schulze ; Lüders.** Theory and Applications of OFDM and CDMA. John Wiley & Sons, 2005